Europäisches Patentamt

European Patent Office

Office européen des brevets

(11) Veröffentlichungsnummer: **0 306 626 B1**

(12) **EUROPÄISCHE PATENTSCHRIFT**

(45) Veröffentlichungstag der Patentschrift: **19.02.92**

(51) Int. Cl.⁵: **B62D 17/00**, B62D 7/20

(21) Anmeldenummer: **88109157.3**

(22) Anmeldetag: **08.06.88**

(54) **Verstelleinrichtung für das Gelenk eines Lenkers einer Radaufhängung.**

(30) Priorität: **09.09.87 DE 3730176**

(43) Veröffentlichungstag der Anmeldung:
**15.03.89 Patentblatt 89/11**

(45) Bekanntmachung des Hinweises auf die
Patenterteilung:
**19.02.92 Patentblatt 92/08**

(84) Benannte Vertragsstaaten:
**DE ES FR GB IT SE**

(56) Entgegenhaltungen:
**DE-A- 3 200 879        FR-A- 1 554 338**
**GB-A- 551 214          GB-A- 2 096 075**
**US-A- 3 880 444        US-A- 4 267 896**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Matschinsky, Wolfgang
Georgenschwaigstrasse 18
W-8000 München 40(DE)**

Rank Xerox (UK) Business Services

**Beschreibung**

Die Erfindung bezieht sich auf eine Verstelleinrichtung für das Gelenk eines Lenkers oder dergleichen einer Kraftfahrzeug-Radaufhängung nach dem Oberbegriff des Patentanspruchs 1.

Bei einer bekannten derartigen Verstelleinrichtung (US-A-4 267 896) sind als flache U-Profile vorgesehene Exzenterabstützungen vorgesehen, die eine Mehrzahl von vorgebohrten Löchern aufweisen. Die Lagerwangen, an denen diese Abstützflansche zu befestigen sind, sind zunächst nur mit dem Langloch für den Gelenk-Bolzen versehen. Die Abstützflansche werden am Fahrzeug in eine geeignete Position gebracht, worauf dann mit Hilfe der schon vorgebohrten Löcher erst wenigstens zwei Löcher in den Lagerwangen mit der Hand gebohrt werden. Durch die Löcher der Abstützflansche und der Langerwangen werden anschließend Scherstifte getrieben, um die Abstützflansche in der Ebene der Lagerwangen möglichst sicher gegen Verschieben an diesen festzulegen. Eine derartige Anbringungsmethode der Abstützflansche für die Exzenterscheibe ist äußerst umständlich und sie gewährleistet trotzdem nicht eine sehr präzise Festlegung der Abstützflansche mit Bezug auf das Langloch.

Weitere Exzenter-Verstelleinrichtungen sind in vielfachen Bauausführungen schon bekannt, wobei in der Regel die Abstützung der Exzenterscheibe zum Feineinstellen des Lenkerlagers über Führungsleisten erfolgt. Diese Führungsleisten erstrecken sich senkrecht zur Längserstreckung des Langlochs und sind an den Lagerwangen fest ausgebildet. Sie können durch rechtwinklig aus der Lagerwange herausgebogene Blechlaschen gebildet sein (DE-A 31 31 107), durch mit der Langerwange verschweißte Führungsschienen gebildet sein (DE-A 32 00 836) oder durch abgebogene Blechlaschen eigener Lagerschilde gebildet sein, die ebenfalls wiederum an den Lagerwangen angeschweißt sind (DE-A 31 00 701).

Diese bekannten Verstelleinrichtungen sind alle deswegen nachteilig, weil die Führungsleisten für die Exzenterscheiben schon vor dem Zusammenschweißen der Bodengruppe des Fahrzeugs bzw. des Fahrschemels, der den Lagerbock trägt, fest angebracht sind. Aus Genauigkeitsgründen wird das den Gelenkbolzen des Gelenks aufnehmende Langloch jedoch erst nach dem Schweißen gebohrt oder gestanzt. Die maßliche Zuordnung des Langlochs zu den Führungsleisten befriedigt dabei noch nicht und es müssen größere Toleranzen hingenommen werden. Aus diesem Grund sind Exzenterscheiben mit großer Ezentrizität nötig, um nicht nur das Verstellspiel, sondern auch die Zusammenbau- und Fertigungstoleranzen zu überbrücken. Schweißt man die Führungsleisten beispielsweise erst nach dem Bohren oder Stanzen des Langlochs an, so ergibt sich insgesamt ein teurer Fertigungsablauf.

Der Erfindung liegt die Aufgabe zugrunde, eine Verstelleinrichtung der vorausgesetzten Bauart zu schaffen, die eine höhere Maßgenauigkeit der Abstützflächen der Exzenterscheibe zu den Langlöchern der Lagerwangen ermöglicht.

Diese Aufgabe wird bei einer Verstelleinrichtung nach dem Oberbegriff des Patentanspruchs 1 erfindungsgemäß durch die im Kennzeichen dieses Patentanspruchs aufgeführten Merkmale gelöst. Auf diese Weise lassen sich die der Abstützung der Exzenterscheibe dienenden Flächen sehr maßgenau an dem noch von dem Lagerbock entfernten Bauteil fertigen. Es besteht kaum die Gefahr, daß durch Schweißvorgänge und ähnliches ein Verzug entsteht, der nicht nur die Maßhaltigkeit beeinträchtigt, sondern auch die Feinfühligkeit, mit der das Lenkerlager einjustiert werden kann. Da die für die Befestigung des separat montierbaren Bauteils an der Lagerwange vorgesehenen Durchbrechungen in einer Werkstückaufspannung und von der gleichen Seite wie das Langloch bearbeitet werden können, können Maßtoleranzen sehr eng gehalten werden.

Die Erfindung soll im folgenden anhand mehrerer, in der Zeichnung ausgeführten Ausführungsbeispiele näher erläutert werden. Es zeigen

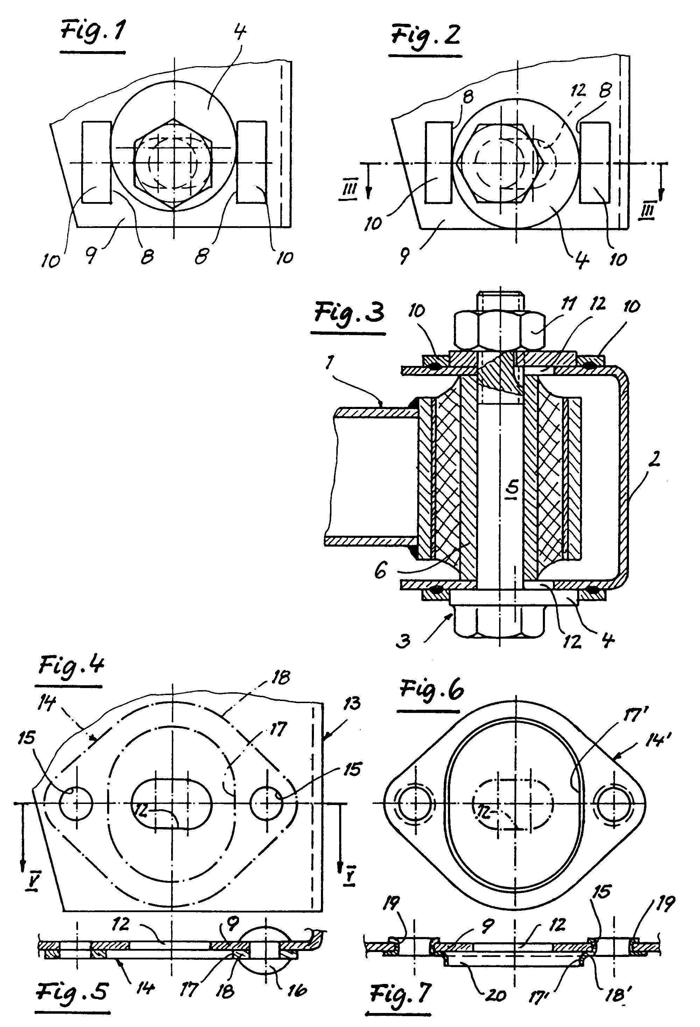

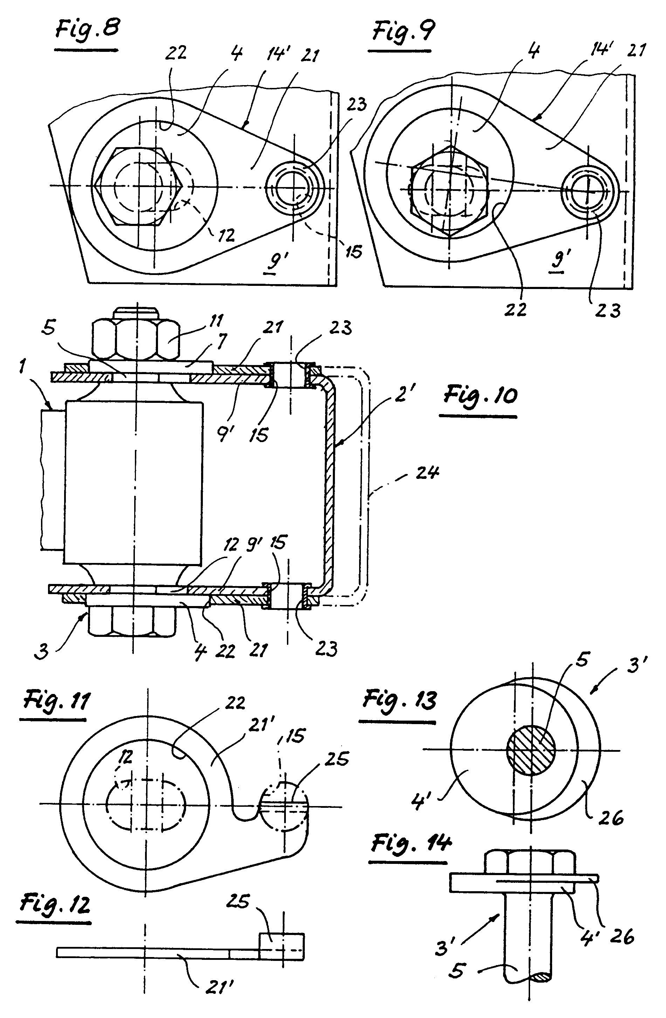

Fig. 1 und 2
seitliche Teilansichten einer bekannten Verstelleinrichtung in zwei verschiedenen Stellungen der Exzenterscheibe;
Fig. 3
einen Schnitt nach der Linie III-III in Fig. 2;
Fig. 4
eine der Fig. 1 entsprechende Teilansicht einer ersten Ausführungsform der erfindungs gemäßen Verstelleinrichtung;
Fig. 5
einen Schnitt nach der Linie V-V der Fig. 4;
Fig. 6 und 7
etwa den Fig. 4 und 5 entsprechende Darstellungen einer zweiten Ausführungsform;
Fig. 8, 9 und 10
den Fig. 1, 2 und 3 entsprechende Darstellungen einer dritten Ausführungsform;
Fig. 11 und 12
etwa den Fig. 8 und 10 entsprechende Teildarstellungen einer vierten Ausführungsform;
Fig. 13
einen Querschnitt durch die Exzenterschraube, die bei der Ausführungsform nach den Fig. 11 und 12 verwendbar ist und
Fig. 14
eine seitliche Teilansicht auf die Schraube nach Fig. 13.

Die bekannte Ausführungsform einer Verstelleinrichtung nach den Fig. 1 und 3 dient zur Einstellung beispielsweise eines Achslenkers I gegenüber einem aufbaufesten Lagerbock 2. Die Exzenterschraube 3 hat angrenzend an ihren Kopf eine angestauchte Exzenterscheibe 4. Mit ihrem Schaft 5 durchsetzt sie die Innenhülse 6 des am Ende des Achslenkers 1 angeordneten Gummigelenks. An dem in Fig. 3 oberen Ende ist verdrehfest - beispielsweise über eine Längsnut am Schaftende eine weitere lose Exzenterscheibe 7 vorgesehen, die mit der Exzenterscheibe 4 fluchtet. Die Exzenterscheiben 4 und 7 wirken mit den Führungsflächen 8 von zwei an den seitlichen Lagerwangen 9 des Lagerbocks 2 angeschweißten Führungsleisten 10 zusammen. Ist die Mutter 11 nicht festgezogen, so kann durch Verdrehen des Schraubenkopfes der die Innenhülse 6 lagernde Schaft 5 in den Langlöchern 5 der seitlichen Lagerwangen 9 verlagert werden. Ist die gewünschte Lage des Gelenks, beispielsweise zum Erhalt eines gewünschten Sturzwertes eines Rades oder einer bestimmten Vorspureinstellung erreicht, wird die Mutter 11 festgezogen und das Gelenk ist justiert. Die Nachteile, die der in den Fig. 1 bis 3 dargestellten Verstelleinrichtung anhaften können, sind weiter oben bereits erläutert worden.

Das erste Ausführungsbeispiel einer erfindungsgemäßen Verstelleinrichtung, das in den Fig. 4 und 5 dargestellt ist, umfaßt einen Lagerbock 13, der ebenfalls seitliche zueinander parallele Lagerwangen 9 mit den sich in Verstellrichtung erstreckenden Langlöchern 12 aufweist. Es versteht sich, daß der Lagerbock auch durch zwei an einem Fahrschemel oder am Fahrzeugaufbau ausgebildete parallele Blechwandungen bzw. Wandungsteile gebildet sein kann, solange deren Außenflächen zugänglich sind. Für die Abstützung der Exzenterscheibe 4 bzw. 7 der Verstelleinrichtung ist ein separat montierbares Bauteil 14 vorgesehen, das in zwei an das Langloch 12 angrenzenden Bohrungen 15 der Lagerwange 9 verankerbar ist. Die Bohrungen 15 können in einer Werkstückaufspannung - zuammen mit dem Langloch 12 an dem Lagerbock 13 gefertigt werden, wenn dieser fertig mit dem zugeordneten Fahrschemel oder Aufbauabschnitt verschweißt ist. Erst danach wird das separate Bauteil 14 beispielsweise mit Nieten 16 oder ähnlichem an der Lagerwange 9 endgültig festgelegt. Bei den Ausführungsformen nach den Fig. 4 bis 7 wird die Abstützung für die Exzenterscheiben 4 bzw. 7 durch eine langlochartige Exzenterführung 17 bzw. 17′ gebildet, die sich mit ihrer Hauptachse senkrecht zur Hauptachse des Langslochs 12 erstreckt. Die Exzenterführung 17 bzw. 17′ liegt sehr paßgenau zu der Führung der Exzenterschraube 3 in dem Langloch 12. Sie ist in einem flachen Flansch 18 ausgebildet, der bei der Ausführungsform nach Fig. 4 und 5 als einfaches Blechstanzteil gestaltet ist.

Fig. 6 und 7 zeigt ein abgewandeltes Bauteil 14′, das ebenfalls als flacher Flansch 18′ aus Blech besteht und angeformte Hohlnieten 19 aufweist. Auch die Exzenterführung 17′ wird durch einen aus der Ebene des Flansches 18′ herausgeformten Kragen 20 gebildet.

Bei den bisher beschriebenen Ausführungsformen einer erfindungsgemäßen Verstelleinrichtung gemäß Fig. 4 bis 7 verbleiben die zur Abstützung der Exzenterscheiben 4 bzs. 7 dienenden flachen Flansche 18 bzw. 18′ endgültig an dem Lagerbock 3, wenn sie einmal dort montiert worden sind.

Fig. 8 bis 10 zeigt eine weitere Ausführungsform, bei der die Abstützung der Exzenterscheibe 4 bzw. 7 durch ein ebenfalls separat montierbares Bauteil 14′, nämlich einen schwenkbar an der Lagerwange 9′ anbringbaren Flansch 21 gebildet ist. Die Exzenterscheiben 4 bzw. 7 sind dabei drehbar in einer Bohrung 22 jedes Flansches 21 aufgenommen. Die schwenkbaren Flansche 21 sind jeweils in einer einzigen Befestigungsbohrung 15 gelagert, die in der Lagerwange 9′ in der Verlängerung des Langlochs 12 vorgesehen ist. Die schwenkbare Lagerung der Flansche 21 an den Lagerwangen 9′ kann beispielsweise durch Hohlnieten 23 erfolgen. Auch bei der Ausführungsform nach den Fig. 8 bis 10 kann durch Verdrehen der Exzenterschraube 3 eine Längsverlagerung des Schaftes 5 dieser Schraube in dem Langloch 12 bewirkt werden. Der Flansch 21 führt bei derartigen Verstellbewegungen geringe Schwenkbewegungen aus.

In Fig. 10 ist in strichpunktierten Linien angedeutet, daß die Flansche 21 beider Lagerwangen 9′ durch einen Steg 24 miteinander verbunden sein können und zusammen einen U-förmigen Abstützbügel für die Exzenterscheiben 4 und 7 bilden können.

In Fig. 11 ist ein schwenkbarer Flansch 21′ dargestellt, der ebenfalls eine runde Bohrung 22 für die Aufnahme und Abstützung der Exzenterscheibe 4′ der in den Fig. 13 und 14 dargestellten Exzenterschraube 3′ hat. Der Flansch 21′ ist ebenfalls als einfaches, gestanztes und gebogenes Teil aus Blech gefertigt und greift mit einer rechtwinklig abgebogenen Stützlasche 25 in die in strichpunktierten Linien angedeutete Bohrung 15 der Lagerwange ein. Die Stützlasche 25 sollte möglichst spielfrei in die Bohrung 15 passen. Sie erstreckt sich in der Verlängerung der Hauptachse des in Fig. 11 ebenfalls in strichpunktierten Linien dargestellten Langlochs 12 der Langerwange 9, um die beim Verstellen auftretenden Stützkräfte gut aufnehmen zu können.

Die in den Fig. 13 und 14 dargestellte Exzenterschraube 3′ ist mit einem angestauchten Exzenter 4′ versehen. Damit der Flansch 21′ nicht von dem zugehörigen Lagerbock fallen kann, schließt sich an die Exzenterscheibe 4' zum Kopf der Schraube 3' hin ein mit seinem Teilumfang zum Schaft 5 der Exzenterschraube 3' koaxialer Teil-Ringbund 26 an. Mit diesem Teil-Ringbund 26 ist der Flansch 21' gegen Herunterfallen gesichert. Darüber hinaus kann er im Stauchwerkzeug so dimensioniert werden, daß er beim Anziehen der Mutter 11 die ohne ihn am Lagerbock entstehende Druck-Unsymmetrie ausgleicht. Die auf der Seite der Mutter 11 vorzusehende drehfest mit dem Schaft 5 der Exzenterschraube 3 angeordnete (nicht dargestellte) Exzenterscheibe müßte ebenfalls mit einem vergleichbaren Ringbund versehen werden, was am einfachsten durch Zusammenpunkten zweier entsprechend gestalteter Blechscheiben erfolgt.

Mit den beschriebenen Verstelleinrichtungen lassen sich die Toleranzen besser beherrschen. Es hat sich z.B. gezeigt, daß Exzenterschrauben im allgemeinen zweiteilig hergestellt werden müssen, wenn die Exzentrizität mehr als 3 mm beträgt. So kann es wegen der eingangs beschriebenen Addierung von Toleranzabweichungen erforderlich werden, eine Exzentrizität von deutlich mehr als 3 mm vorzusehen, was wegen der mehrteiligen Bauweise der Exzenterschraube zu einer Erhöhung der Fertigungskosten führt. Gelingt es mit den neuen Verstelleinrichtungen die Toleranzen sehr gering zu halten, kann man u.U. auch mit einteilig fertig gestauchten Exzenterschrauben auskommen.

**Patentansprüche**

1. Verstelleinrichtung für das Gelenk eines Lenkers (1) oder dergleichen einer Kraftfahrzeug-Radaufhängung, mit einem Lagerbock (2', 13), der an seitlichen Lagerwangen (9, 9') jeweils ein sich in Verstellrichtung erstreckendes Langloch (12) und ferner ein separat montierbares und an wenigstens einer dem Langloch (12) benachbarten Durchbrechung (Bohrung 15) verankerbares Bauteil (14, 14') mit in Richtung des Langloches (12) wirksame Abstützungen für eine verdrehbare Exzenterscheibe (4, 4') aufweist, die exzentrisch den Lagerbolzen (5) des Gelenks trägt, dadurch gekennzeichnet, daß sowohl das Langloch (12) als auch die zum Verankern des Bauteils (14, 14') vorgesehene Durchbrechung (Bohrung 15) in einer Werkstückaufspannung vorgefertigt sind.

2. Einrichtung nach Anspruch 1, dadurch gekennzeichnet, daß die Abstützung als langlochartige Exzenterführung (17, 17') in einem flachen Flansch (18, 18') ausgebildet ist, der über mindestens zwei neben den Langlöchern (12) befindliche Befestigungsbohrungen (15) an der Lagerwange (9) befestigbar ist.

3. Einrichtung nach Anspruch 2, dadurch gekennzeichnet, daß die Befestigungsbohrungen (15) in der Verlängerung des Langloches (12) liegen.

4. Einrichtung nach Anspruch 2, dadurch gekennzeichnet, daß der Befestigungsflansch (18' angeformte Hohlnieten (19) aufweist, die den Befestigungsbohrungen (15) zugeordnet sind.

5. Einrichtung nach Anspruch 1, dadurch gekennzeichnet, daß die Abstützung durch eine runde, die Exzenterscheibe (4, 7) drehbar aufnehmende Bohrung (22) in einem schwenkbar an der Lagerwange (9') anbringbaren Flansch (21, 21') gebildet ist.

6. Einrichtung nach Anspruch 5, dadurch gekennzeichnet, daß der schwenkbare Flansch (21, 21') in einer Befestigungsbohrung (15) gelagert ist, die in der Lagerwange (9') in der Verlängerung des Langlochs (12) vorgesehen ist.

7. Einrichtung nach Anspruch 6, dadurch gekennzeichnet, daß die Flansche (21) beider Lagerwangen (9') durch einen Steg (24) miteinander verbunden sind und zusammen einen U-förmigen Abstützbügel bilden.

8. Einrichtung nach Anspruch 6, dadurch gekennzeichnet, daß der schwenkbare Flansch (21') mit einer rechtwinklig abgebogenen Stützlasche (25) in die Befestigungsbohrung (15) eingreift.

9. Einrichtung nach Anspruch 8, dadurch gekennzeichnet, daß die Stützlasche (25) sich in der Verlängerung der Hauptachse des Langslochs (12) erstreckt.

10. Einrichtung nach Anspruch 8, mit einer Exzenterscheibe, die an der die Langlöcher durchsetzenden Schraube angeformt ist, dadurch gekennzeichnet, daß sich an die Exzenterscheibe (4') ein mit seinem Teilumfang zur Schraube (3') koaxialer Teil-Ringbund (26) anschließt.

**Claims**

1. An adjusting device for the joint of a control arm (1) or the like of a motor vehicle wheel suspension, having a mounting bracket (2', 13) which comprises on lateral mounting side pieces (9, 9') in each case a slot (12) extending in the direction of adjustment and, further, a separately-fittable component (14, 14') anchorable to at least one through-hole (bore 15) adjacent to the slot (12), with support effective in the direction of the slot (12) for a rotatable eccentric disc (4, 4') which eccentrically carries the bearing bolt (5) of the joint, characterised in that both the slot (12) and the through-hole (bore 15) provided for the anchorage of the component (14, 14') are machined during a single clamping or chucking of the workpiece.

2. A device according to Claim 1, characterised in that the support is formed as a slot-like eccentric guide (17, 17') in a flat flange (18, 18') which can be secured on the bearing side piece (9) by means of at least two fastening bores (15) situated beside the slots (12).

3. A device according to Claim 2, characterised in that the fastening bores (15) lie in alignment with the slot (12).

4. A device according to Claim 2, characterised in that the fastening flange (18') comprises formed-on hollow rivets (19) which are allocated to the fastening bores (15).

5. A device according to Claim 1, characterised in that the support is formed by a round bore (22), rotatably receiving the eccentric disc (4, 7), in a flange (21, 21') which can be fitted pivotably on the bearing side piece (9').

6. A device according to Claim 5, characterised in that the pivotable flange (21, 21') is mounted in a fastening bore (15) which is provided in the bearing side piece (9') in alignment with the slot (12).

7. A device according to claim 6, characterised in that the flanges (21) of the two bearing side pieces (9') are connected with one another by a cross piece (24) and together form a U-shaped support stirrup piece.

8. A device according to Claim 6, characterised in that the pivotable flange (21') engages with a support tab (25), bent over at right angels, in the fastening bore (15).

9. A device according to Claim 8, characterised in that the support tab (25) extends in alignment with the main axis of the slot (12).

10. A device according to Claim 8 having an eccentric disc which is formed on the screw penetrating the slots, characterised in that a part-annular collar (26) coaxial by its part-circumference with the screw (3') adjoins the eccentric disc (4').

**Revendications**

1. Dispositif de réglage pour le réglage de la tringlerie (1) ou analogue de la direction d'une roue de véhicule, avec un support (2', 13) qui présente sur des flasques latéraux de support (9, 9') un trou oblong (12) s'étendant dans le sens du réglage et, en outre, une pièce (14, 14') pouvant être montée séparément et pouvant être bloquée sur au moins un passage (alésage 15) voisin du trou oblong (12) avec des appuis, agissant dans le sens du trou oblong (12) par un disque d'excentrique (4, 4') pouvant tourner, disque qui porte le boulon (5) de la tringlerie de façon excentrée, dispositif de réglage caractérisé en ce qu'aussi bien le trou oblong (12) que le passage (alésage 15) prévus pour le blocage de la pièce (14, 14') sont préfabriqués dans un serrage de pièces.

2. Dispositif selon la revendication 1, caractérisé en ce que l'appui est formé comme un guidage d'excentrique (17, 17') du type à trou oblong dans un flasque plat (18, 18'), qui peut être fixé par au moins deux perçages de fixation (15), se trouvant à côté des trous oblongs (12) sur le flasque support (9).

3. Dispositif selon la revendication 2, caractérisé en ce que les perçages de fixation (15) se trouvent dans le prolongement du trou oblong (12).

4. Dispositif selon la revendication 2, caractérisé en ce que le flasque de fixation (18') présente des rivets creux préformés (19), qui sont associés aux perçages de fixation (15).

5. Dispositif selon la revendication 1, caractérisé en ce que l'appui est constitué par un perçage rond (22) recevant le disque d'excentrique (4, 7) de façon à ce qu'il puisse tourner, dans un flasque (21, 21') pouvant être monté de façon à pouvoir pivoter sur le flasque support (9').

6. Dispositif selon la revendication 5, caractérisé en ce que le flasque (21, 21') pouvant pivoter est monté dans un perçage de fixation (15), qui est prévu dans le flasque support (9') dans le prolongement du trou oblong (12).

7. Dispositif selon la revendication 7, caractérisé en ce que les flasques (21) des deux flasques supports (9') sont réunis par une entretoise (24) et forment ensemble un étrier d'appui en forme d'U.

**8.** Dispositif selon la revendication 6, caractérisé en ce que le flasque (21') pouvant pivoter, vient en prise avec une patte d'appui (25) repliée à angle droit, dans le perçage de fixation (15).

**9.** Dispositif selon la revendication 8, caractérisé en ce que la patte d'appui (25) s'étend dans le prolongement de l'axe principal du trou oblong (12).

**10.** Dispositif selon la revendication 8, avec un disque d'excentrique, qui est formé sur le boulon traversant les trous oblongs, caractérisé en ce qu'une attache annulaire (26) partielle, dont le pourtour partiel est coaxial au bouton (3') est rattachée au disque d'excentrique (4').

EP 0 306 626 B1

Fig.1

Fig.2

Fig.3

Fig.4

Fig.5

Fig.6

Fig.7

Fig.8

Fig.9

Fig.10

Fig.11

Fig.12

Fig.13

Fig.14